# FASCICULE DE BREVET EUROPEEN

(11) **EP 1 150 461 B1**
(45) Date de publication et mention de la délivrance du brevet: **05.09.2007**
(21) Numéro de dépôt: 01401042.5
(22) Date de dépôt: 24.04.2001
(51) Int. Cl.: H04L 12/46, H04L 29/14

(54) **Dispositif de gestion d'entrés/sorties redondant, notamment un système de routage informatique**
Reduntante Input/Output Management Einheit, insbesondere ein Wegewahlsystem
Redundant device of management of inputs/outputs, in particular a routing system

(30) Priorité: 28.04.2000 FR 0005517
(43) Date de publication de la demande: 31.10.2001
(73) Titulaire: Airsys ATM S.A., 92220 Bagneux (FR)
(72) Inventeur: Baretzki, Laurent, c/o Thomson-CSF Prop. Intell, 94117 Arcueil, Cedex (FR)
(74) Mandataire: Lucas, Laurent Jacques

(56) Documents cités:
- EP-A- 0 416 943
- US-A- 5 649 091
- US-A- 5 675 723

## Description

La présente invention concerne un dispositif de gestion d'entrées/sorties redondant, notamment un système de routage informatique. Elle s'applique en particulier pour le traitement des informations de gestion de trafic aérien. Plus généralement, elle s'applique pour tous systèmes de gestion d'entrées et sorties de données numériques nécessitant une grande sûreté de fonctionnement sans surcoût excessif.

La densité de trafic aérien a atteint un niveau très important. Par ailleurs, les exigences de sécurité aériennes sont toujours de plus en plus accrues. Une conséquence de cette situation est que la gestion du trafic aérien doit traiter un grand nombre d'informations, destinées notamment aux contrôleurs aériens et aux pilotes d'avions. Ces informations sont en particulier relatives à une large catégorie de données radar, à des situations météorologiques, à des plans de vol ou encore à des données de type ILS concernant les systèmes d'atterrissage.

Le traitement de ces informations ne peut se faire que par des moyens informatiques puissants. Parmi ces moyens, un rôle essentiel est joué par les moyens d'interfaçage des différents centres d'informations ou de décisions. Ces moyens d'interfaçage ont notamment une fonction de routage des informations, ils ont donc notamment une fonction d'aiguillage des données vers les bons centres de destination. Etant donnés les flots très importants de données en jeu, ces moyens ont un rôle essentiel pour le bon fonctionnement global d'un système de gestion du trafic aérien. Les données traitées sont notamment les données radar et autres données relatives à la situation de vol des avions, telles que par exemple des plans de vol ou informations météorologiques.

Il existe des matériels connus et notamment disponibles dans le commerce, équipés de leurs systèmes d'exploitation, qui permettent de répondre à ces besoins de routage. A titre d'exemple, on peut citer une gamme de produits connus par la marque déposée LINES issue de l'expression anglo-saxonne « Link Interface Node for External Systems ». Ces produits, de type modulaire, sont conçus pour permettre le routage et le traitement de messages d'entrées/sorties parmi des lignes séries entrantes ou sortantes et Ethernet. Les lignes série standards telles que par exemple X25, HDLC ou BSC sont traitées aussi bien que des lignes dédiées, telles que par exemple des protocoles de transmissions d'informations radar particuliers.

Ces routeurs peuvent fonctionner avec une architecture logicielle de type à processeur frontal. Ils sont équipés d'un logiciel de type FPBSS, ce dernier terme étant issu de l'expression anglo-saxonne « Front Processor Basic System Software ». Dans ce mode de réalisation, le routeur est relié à un seul programme d'application. Il n'a qu'une fonction amont, par exemple l'aiguillage des données vers la bonne destination. Tout le coeur de l'applicatif est dans un ou plusieurs calculateurs centraux. En d'autres termes, il faut autant de routeurs que d'applicatifs.

Une utilisation plus performante de ces routeurs peut se faire selon un mode de communication ouvert, dit encore OCP selon l'expression anglo-saxonne « Open Communication Processor ». Dans ce mode, un routeur est relié à plusieurs applications et fonctionne sensiblement comme un serveur de données. Il permet notamment d'aiguiller et de traiter les données depuis n'importe quel point d'entrée vers n'importe quel point de sortie. Ce mode de fonctionnement est particulièrement bien adapté à la gestion du trafic aérien. Dans une application de gestion du contrôle aérien, ce mode permet en effet notamment les fonctionnalités suivantes, c'est-à-dire :
- une distribution du type boîte noire des données radar vers les centres, les données radar étant reçues par des interfaces séries et transmises via un réseau local, par exemple Ethernet, vers un groupe de machines identifiées, diffusion encore appelée UDP multicast dans la littérature anglo-saxonne ;
- une conversion autonome de messages ou protocoles, permettant notamment la conversion de format de message ou protocoles spécifiques, ainsi par exemple ISR2 en ASTERIX, X25 en HDLC-UI... ;
- une fonction de contrôle de ligne dans les systèmes radar, c'est-à-dire la transmission de données radar par des lignes séries vers les circuits de traitement.

Dans une application de type gestion de trafic aérien, la sûreté de fonctionnement des systèmes informatiques, et donc des systèmes de routages est de toute première importance, puisque la sécurité des passagers est en effet en jeu. A titre d'exemple, les normes de sécurité en vigueur imposent que la couverture aérienne d'un centre de contrôle de trafic aérien ne doit pas être interrompue plus de quelques secondes par an. Il est donc nécessaire de recourir à des techniques de redondance, c'est-à-dire en particulier dupliquer les équipements afin que l'un d'eux puisse se substituer à l'autre en cas de défaillance. En règle général, chaque routeur est dupliqué. Un problème à résoudre est le passage d'un routeur à un autre, lorsque le premier est défaillant. Une solution connue consiste à prévoir un routeur actif, appelé maître, et un routeur inactif, appelé esclave, avec un système tiers qui arbitre le passage de l'exécution du maître à l'esclave. Cette solution n'est pas économique en raison notamment de l'utilisation d'un système tiers, qui s'ajoute au routeur redondant.

Pour rendre le système économique, il est possible de supprimer l'arbitre. On prévoit alors un protocole d'échanges entre le maître et l'esclave. En particulier, lorsque le maître devient défaillant, l'esclave ne reçoit plus de messages. L'esclave prend alors le relais. Cependant, il y a des modes dégradés, notamment où le maître dégrade les données traitées sans qu'il le sache. Le maître ne sachant pas qu'il est défaillant ne désactive pas ses entrées/sorties. L'esclave de son côté sait que le maître est défaillant mais n'est alors pas en mesure de prendre correctement le contrôle du routage, du fait notamment que le maître n'a pas désactivé ses ports d'entrées/sorties. Le système continue de fonctionner en mode dégradé. Il en résulte une dégradation inquiétante de la sûreté de fonctionnement.

Un document EP-A-0 416 943 décrit un dispositif des gestion d'entrées et de sorties de données numériques. Un document US-A-5 675 723 décrit un dispositif multiserveur.

Un but de l'invention est de réduire les coûts liés à la sûreté de fonctionnement, en supprimant l'utilisation d'un système d'arbitrage tiers, et cela sans dégrader la sûreté de fonctionnement quels que soient les types de ports d'entrées/sortie. A cet effet, l'invention a pour objet un dispositif de gestion d'entrées et de sorties de données numériques, caractérisé en ce qu'il comporte des premiers moyens de gestion et des deuxièmes moyens de gestion reliés l'un à l'autre par deux interfaces, un réseau et une ligne de sécurité, ces moyens échangeant mutuellement des messages d'interrogations par ces deux interfaces, des moyens étant considérés comme défaillants par les autres moyens lorsqu'ils n'émettent aucun message dans un intervalle de temps donné sur au moins une des deux interfaces.

Les moyens de gestion d'entrées et de sorties peuvent être des routeurs ou des serveurs de données.

Au démarrage, les premiers moyens ont par exemple le rôle de maître et les seconds moyens le rôle d'esclave, le maître gérant les données d'entrées et de sorties. Pour assurer une redondance, les moyens ont les mêmes fonctions et comportent les mêmes logiciels et même fichiers de configuration.

Lorsque des moyens sont détectés comme étant défaillants par les autres moyens, ces derniers désactivent par exemple les moyens défaillants. L'esclave peut alors prendre en charge la gestion des données à la place du maître.

Avantageusement, les messages d'interrogation, la fréquence d'envoi de ces messages, le temps limite entre deux messages sont implantés dans un fichier de configuration contenu dans chacun des moyens, plusieurs types de ces paramètres étant stockés en fonction d'applications données. Ainsi, les paramètres propres à une application peuvent être déchargés dans une mémoire vive lors de l'initialisation du dispositif.

L'invention a notamment pour principaux avantages qu'elle s'adapte à de nombreuses applications et qu'elle est simple à mettre en oeuvre.

D'autres caractéristiques et avantages de l'invention apparaîtront à l'aide de la description qui suit faite en regard de dessins annexés qui représentent :
- la figure 1, un exemple de système de routage redondant dans le cas où les ports d'entrées et de sorties sont du type série ;
- la figure 2, un exemple de routage redondant comportant un réseau de communication, du type Ethernet, avec des postes clients.

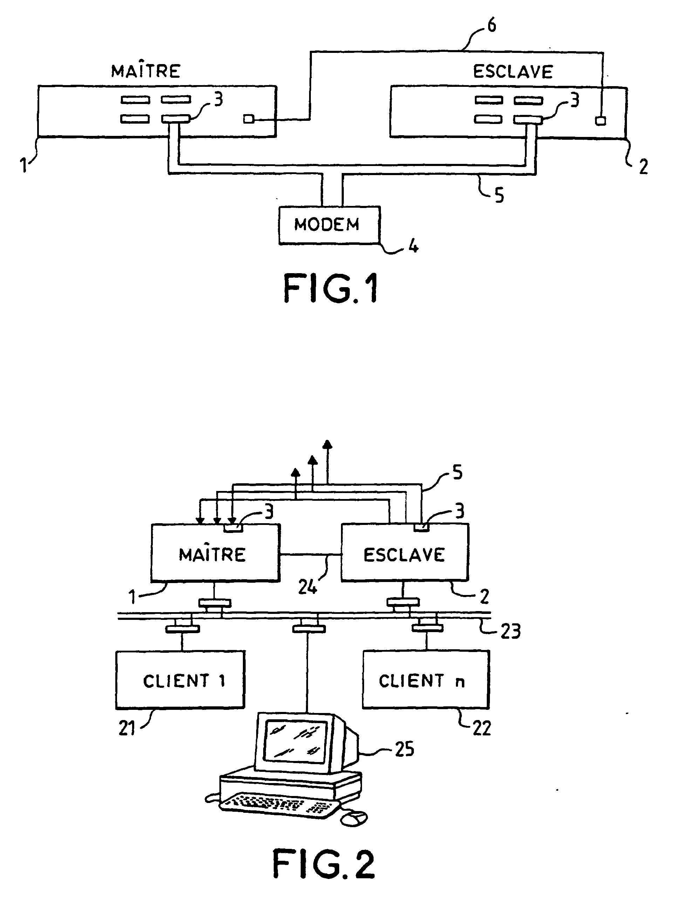

La figure 1 présente un exemple de système de routage redondant dans le cas où les ports d'entrées/sorties sont du type série. Le système comporte un routeur 1 ayant la fonction de maître et un routeur 2 ayant la fonction d'esclave. Ces deux routeurs ont les mêmes fonctions et comportent notamment les mêmes logiciels et mêmes fichiers de configurations. Un même port 3 de chaque routeur communique par une liaison série avec un même système 4, par exemple un modem. A cet effet, la liaison entre ce dernier et les deux routeurs se fait par un câble en y 5. Un bus de sécurité 6 relie les deux routeurs 1, 2.

Lorsque les deux routeurs 1, 2 démarrent ensemble, le maître 1 active ses modes électriques sur ses ports d'entrées/sorties 3 tandis que l'esclave 2 laisse ses ports 3 inactivés, c'est-à-dire à l'état de haute impédance. Cela signifie que même si les deux routeurs sont configurés, seul le maître 1 échange avec le modem 4. En cas de défaillance du maître, deux cas peuvent notamment se produire :
- le maître remet à zéro ou « reset » en mettant ses ports 3 à l'état de haute impédance et devient lui-même esclave, dans le même temps, l'esclave 2 devient maître et ses ports sont électriquement activés, c'est la situation normale et simple à gérer ;
- le maître devient défaillant, mais ne « reset » pas, l'esclave sait qu'il devrait devenir maître, mais le maître actuel ne désactive pas ses ports, il n'y a donc pas commutation d'un routeur à l'autre à cause d'un conflit potentiel entre les ports 3 des deux routeurs, c'est la situation la plus complexe à gérer.

La deuxième situation doit cependant être réglée car elle affecte dangereusement la sûreté de fonctionnement. Dans ce mode de fonctionnement, le maître peut en effet traiter ou router des données fausses. Pour traiter ce problème, on prévoit notamment le bus de sécurité 6 connecté entre les deux routeurs et destiné à lui envoyer une commande de « reset », c'est-à-dire une commande de désactivation de ses ports 3, cette commande étant envoyée par l'esclave. Ce dernier peut alors reprendre la main.

Le type d'architecture de redondance illustré par la figure 1 est bien adapté lorsque les ports d'entrées/sorties en jeu sont des ports série. Il n'en est plus de même lorsque le routeur échange par un réseau local, appelé LAN dans la littérature anglo-saxonne selon l'expression « Local Area Network », par exemple Ethernet.

La figure 2 illustre un exemple de réalisation d'un dispositif selon l'invention. Il s'agit d'un système de routage informatique comportant deux routeurs 1, 2, dont l'un est maître et l'autre esclave. Ces deux routeurs fonctionnent en mode ouvert OCP. Le dispositif étant redondé, les deux routeurs comportent alors les mêmes fonctions, et notamment les mêmes logiciels et mêmes fichiers de configuration. De même, les entrées et sorties vers d'autres systèmes sont redondées.

Les deux routeurs sont par exemple reliés par un réseau 23, par exemple Ethernet ou Internet, à un ou plusieurs systèmes clients distants 21, 22. Ils sont par ailleurs reliés à d'autres systèmes, par exemple des modem, par des liaisons série. Un câble en y 5 relie un même port 3 de chaque routeur à un même sytème, de façon notamment à ce que ces deux ports 3 puissent échanger avec ce système. Lorsque le maître est actif, son port série est activé alors que celui de l'esclave est inactivé, en étant par exemple à l'état de haute impédance.

Les deux routeurs sont reliés entre eux par le réseau 23, par exemple Ethernet ou Internet, et par une ligne de sécurité 24, par exemple un bus. A titre d'exemple, on considère un réseau Ethernet 23. Au démarrage, ou à l'initialisation du dispositif, un routeur 1 est maître et l'autre 2 est esclave. C'est le maître qui gère alors les données d'entrées et de sorties, donc qui les route. En cours de fonctionnement, les deux routeurs 1, 2 échangent mutuellement des messages d'interrogation, encore appelés « polling messages » dans la littérature anglo-saxonne. Ces messages d'interrogation sont par exemple échangés cycliquement, c'est-à-dire à intervalles de temps réguliers. Ils sont échangés par le réseau Ethernet 23, par exemple par une diffusion du type UDP unicast. Des messages d'interrogation sont aussi échangés par la liaison de sécurité 24. Un dispositif selon l'invention comporte donc au moins deux interfaces d'échanges de messages d'interrogations, une interface réseau, par exemple Ethernet, et un bus de communication 24. Un message d'interrogation est envoyé par l'esclave au maître pour vérifier que le maître est en bon état de fonctionner, pour vérifier qu'il n'est pas défaillant. A cet effet, le maître doit répondre à ce message. Tous types de messages d'interrogations peuvent être utilisés. Le plus simple est par exemple d'envoyer au maître un message donné et vérifier que celui-ci le renvoie intégralement. De son côté, le maître envoie de son côté des messages d'interrogation à l'esclave pour vérifier que celui-ci est aussi en état de fonctionner. Il y a donc ainsi une supervision des deux matériels 1, 2 sans l'aide d'un tiers équipement.

Lorsque l'esclave 2 ne reçoit pas au moins un message d'interrogation dans un intervalle de temps donné sur au moins une des deux interfaces, Ethernet 23 ou la liaison sécurité 24, son programme considère que le maître est défaillant. L'esclave décide alors de devenir maître. A cet effet, il active le mécanisme de commutation. Ce mécanisme de commutation peut avoir plusieurs composantes. Il comporte un algorithme, implanté par exemple à la fois dans le maître et l'esclave, qui force le maître à se remettre à zéro, plus particulièrement à se ré-initialiser. Cet algorithme est programmé par ailleurs de telle sorte que lors de cette ré-initialisation, l'esclave prenne la main, donc devienne actif dans le traitement des données, alors que le maître reste inactif. Cet algorithme prévoit par ailleurs la désactivation des ports d'entrées/sorties du maître et l'activation des ports d'entrées/sorties de l'esclave devenu maître. Un poste de supervision 25 permet par exemple de lire des comptes-rendus de pannes ou de défaillance envoyées par le maître ou l'esclave. Ce poste 25 peut être utilisé par ailleurs pour d'autres fonctions dans le cadre général de l'application. Le dispositif comporte par exemple des moyens d'alerte pour prévenir d'une défaillance, afin que le matériel défaillant soit remplacé dans les délais imposés.

L'algorithme qui force la remise à zéro du maître, et finalement sa désactivation, est implanté dans le maître, mais il est activé par l'esclave. A cet effet, l'esclave connaît l'adresse mémoire de cet algorithme. Plus précisément l'adresse mémoire de cet algorithme est contenue dans l'esclave, du moins accessible. De préférence et de façon symétrique, l'algorithme est aussi implanté dans l'esclave, pour des raisons de standardisation de réalisation des matériels, mais aussi pour que le maître puisse désactiver complètement l'esclave en cas de défaillance de ce dernier. Le maître a donc accès par ailleurs à l'adresse de l'algorithme de mise à zéro présent dans l'esclave. L'algorithme de remise à zéro, son adresse, les messages d'interrogation, la fréquence des envois de ces messages, le temps limite entre deux messages avant commutation, ainsi que d'autres paramètres de configurations sont notamment implantés dans un fichier de configuration contenu dans chaque routeur. Plusieurs types de ces paramètres peuvent être stockés dans ce fichier de configuration, chaque type dépendant du type d'application finale. A l'initialisation des routeurs, les paramètres propres à une application sont par exemple déchargés dans une mémoire vive. La gestion des différentes couches logicielles, dont l'algorithme de remise à zéro, ainsi que les communications entre ces couches sont classiquement traitées par un système d'exploitation, éventuellement associés à des couches logicielles intermédiaires, appelées « middleware » dans la littérature anglo-saxonne, implantés dans les routeurs.

L'invention a été décrite pour un dispositif de routage informatique, un routeur étant associé à un routeur redondant. L'invention peut bien sûr s'appliquer à d'autres moyens de gestions d'entrées/sorties, tels que par exemple des serveurs de données. Elle s'applique avantageusement à tous types d'applications nécessitant une grande sûreté de fonctionnement avec des exigences d'économies. Par ailleurs, elle est simple à mettre en oeuvre, puisque cette mise en oeuvre est essentiellement logicielle.

## Revendications

1. Dispositif de gestion d'entrées et de sorties de données numériques, comportant des premiers moyens de gestion (1) et des deuxièmes moyens de gestion (2) reliés l'un à l'autre par deux interfaces, un réseau (23) et une ligne de sécurité (24), ces moyens échangeant mutuellement des messages d'interrogations par ces deux interfaces (23, 24), des moyens (1) étant considérés comme défaillants par les autres moyens (2) lorsqu'ils n'émettent aucun message dans un intervalle de temps donné sur au moins une des deux interfaces (23, 24), **caractérisé en ce qu'**il comporte des moyens adaptés à l'éxecution d'au moins un algorithme de réinitialisation des premiers et deuxièmes moyens (1, 2), les moyens défaillants (1) étant désactivés et les autres moyens (2) activés lors de la réinitialisation après détection d'une défaillance, l'algorithme de réinitialisation étant implanté dans les premiers moyens (1) et deuxième moyens, et activé par les deuxième moyens (2), l'adresse mémoire de l'algorithme étant accessible depuis ces deuxièmes moyens.

2. Dispositif selon la revendication 1, **caractérisé en ce qu'**à l'initialisation de son fonctionnement, les premiers moyens (1) ont le rôle de maître et les seconds moyens (2) ont le rôle d'esclave, le maître gérant les données d'entrées et de sorties.

3. Dispositif selon l'une quelconque des revendications précédentes, **caractérisé en ce que** les moyens (1, 2) sont reliés par le réseau (23) à un ou plusieurs systèmes (21, 22).

4. Dispositif selon l'une quelconque des revendications précédentes, **caractérisé en ce** les moyens (1,2) sont reliés par une ou plusieurs liaisons série à des systèmes, un câble en y (5) reliant un même port (3) de chaque routeur à un système.

5. Dispositif selon l'une quelconque des revendications précédentes, **caractérisé en ce que** les moyens (1, 2) ont les mêmes fonctions et comportent les mêmes logiciels et mêmes fichiers de configuration.

6. Dispositif selon l'une quelconque des revendications précédentes, **caractérisé en ce que** lorsque des moyens (1) sont détectés comme étant défaillants par les autres moyens (2), ces derniers désactivent les moyens défaillants.

7. Dispositif selon les revendications 2 et 6, **caractérisé en ce que** les moyens défectueux (1) étant le maître, l'esclave désactive les entrées/sorties du maître et active ses propres entrées/sorties.

8. Dispositif selon l'une quelconque des revendications précédentes, **caractérisé en ce que** les messages d'interrogation, la fréquence d'envoi de ces messages, le temps limite entre deux messages sont implantés dans un fichier de configuration contenu dans chacun des moyens (1, 2), plusieurs types de ces paramètres étant stockés en fonction d'applications données.

9. Dispositif selon la revendication 8, **caractérisé en ce qu'**à l'initialisation des moyens (1, 2), les paramètres propres à une application sont déchargés dans une mémoire vive.

10. Dispositif selon l'une quelconque des revendications précédentes, **caractérisé en ce qu'**il comporte des moyens d'alerte pour prévenir d'une défaillance.

11. Dispositif selon l'une quelconque des revendications précédentes, **caractérisé en ce que** le réseau est un réseau numérique local.

12. Dispositif selon l'une quelconque des revendications précédentes, **caractérisé en ce que** les moyens de gestion de données d'entrées/sorties sont des routeurs informatiques.

13. Dispositif selon la revendication 12, **caractérisé en ce que** les routeurs fonctionnent en mode ouvert OCP.

14. Dispositif selon l'une quelconque des revendications 1 à 13, **caractérisé en ce que** les moyens de gestion de données d'entrées/sorties sont des serveurs de données.

## Claims

1. Device for digital data input and output management, comprising first management means (1) and second management means (2) connected together by two interfaces, a network (23) and a security line (24), these means mutually exchanging interrogation messages through these two interfaces (23,24), means (1) being considered to be faulty by the other means (2) when they do not send any message in a given time interval on at least one of the two interfaces (23,24), **characterized in that** it comprises means suitable for executing at least one algorithm for reinitializing the first and second means (1,2), the faulty means (1) being deactivated and the other means (2) activated upon reinitialization after detection of a fault, the reinitialization algorithm being installed in the first means (1) and second means, and activated by the second means (2), the memory address of the algorithm being accessible from these second means.

2. Device according to Claim 1, **characterized in that** when operation thereof is initialized, the first means (1) have the role of master and the second means (2) have the role of slave, the master managing the input and output data.

3. Device according to any one of the preceding claims, **characterized in that** the means (1,2) are connected by the network (23) to one or more systems (21,22).

4. Device according to any one of the preceding claims, **characterized in that** the means (1, 2) are connected by one or more series links to systems, a y-type cable (5) connecting one and the same port (3) of each router to a system.

5. Device according to any one of the preceding claims, **characterized in that** the means (1,2) have the same functions and comprise the same software and same configuration files.

6. Device according to any one of the preceding claims, **characterized in that** when means (1) are detected as being faulty by the other means (2), the latter deactivate the faulty means.

7. Device according to Claims 2 and 6, **characterized in that** the defective means (1) being the master, the slave deactivates the inputs/outputs of the master and activates its own inputs/outputs.

8. Device according to any one of the preceding claims, **characterized in that** the interrogation messages, the frequency at which these messages are dispatched, the limit time between two messages are installed in a configuration file contained in each of the means (1,2), several types of these parameters being stored depending on given applications.

9. Device according to Claim 8, **characterized in that** when the means (1,2) are initialized, the parameters specific to an application are offloaded to a random access memory.

10. Device according to any one of the preceding claims, **characterized in that** it comprises alert means for forewarning of a fault.

11. Device according to any one of the preceding claims, **characterized in that** the network is a local area digital network.

12. Device according to any one of the preceding claims, **characterized in that** the input/output data management means are computer routers.

13. Device according to Claim 12, **characterized in that** the routers operate in OCP open mode.

14. Device according to any one of Claims 1 to 13, **characterized in that** the input/output data management means are data servers.

## Patentansprüche

1. Vorrichtung zur Verwaltung von Eingängen und Ausgängen digitaler Daten, die erste Verwaltungsmittel (1) und zweite Verwaltungsmittel (2) aufweist, die miteinander über zwei Schnittstellen, ein Netzwerk (23) und eine Sicherheitsleitung (24), verbunden sind, wobei diese Mittel über diese zwei Schnittstellen (23, 24) Abfragemitteilungen austauschen, wobei Mittel (1) von den anderen Mitteln (2) als defekt betrachtet werden, wenn sie in einem gegebenen Zeitintervall an mindestens einer der zwei Schnittstellen (23, 24) keine Mitteilung aussenden, **dadurch gekennzeichnet, dass** sie Mittel aufweist, die für die Ausführung mindestens eines Rücksetzalgorithmus der ersten und zweiten Mittel (1, 2) geeignet sind, wobei beim Rücksetzen nach der Erfassung eines Defekts die defekten Mittel (1) deaktiviert und die anderen Mittel (2) aktiviert werden, wobei der Rücksetzalgorithmus in den ersten Mitteln (1) und zweiten Mitteln installiert ist und von den zweiten Mitteln (2) aktiviert wird, wobei die Speicheradresse des Algorithmus von diesen zweiten Mitteln aus zugänglich ist.

2. Vorrichtung nach Anspruch 1, **dadurch gekennzeichnet, dass** bei der Initialisierung ihres Betriebs die ersten Mittel (1) als Master wirken und die zweiten Mittel (2) als Slave wirken, wobei der Master die Eingangs- und Ausgangsdaten verwaltet.

3. Vorrichtung nach einem der vorhergehenden Ansprüche, **dadurch gekennzeichnet, dass** die Mittel (1, 2) über das Netzwerk (23) mit einem oder mehreren Systemen (21, 22) verbunden sind.

4. Vorrichtung nach einem der vorhergehenden Ansprüche, **dadurch gekennzeichnet, dass** die Mittel (1, 2) über eine oder mehrere Serienverbindungen mit Systemen verbunden sind, wobei ein Y-Kabel (5) den gleichen Port (3) jedes Routers mit einem System verbindet.

5. Vorrichtung nach einem der vorhergehenden Ansprüche, **dadurch gekennzeichnet, dass** die Mittel (1, 2) die gleichen Funktionen haben und die gleichen Softwareprogramme und die gleichen Konfigurationsdateien aufweisen.

6. Vorrichtung nach einem der vorhergehenden Ansprüche, **dadurch gekennzeichnet, dass**, wenn Mittel (1) von den anderen Mitteln (2) als defekt erfasst werden, diese letzteren die defekten Mittel deaktivieren.

7. Vorrichtung nach den Ansprüchen 2 und 6, **dadurch gekennzeichnet, dass**, wenn die fehlerhaften Mittel (1) der Master sind, der Slave die Eingänge/Ausgänge des Masters deaktiviert und seine eigenen Eingänge/Ausgänge aktiviert.

8. Vorrichtung nach einem der vorhergehenden Ansprüche, **dadurch gekennzeichnet, dass** die Abfragemitteilungen, die Sendefrequenz dieser Mitteilungen, die Frist zwischen zwei Mitteilungen in einer Konfigurationsdatei installiert sind, die in jedem der Mittel (1, 2) enthalten ist, wobei mehrere Typen dieser Parameter in Abhängigkeit von gegebenen Anwendungen gespeichert sind.

9. Vorrichtung nach Anspruch 8, **dadurch gekennzeichnet, dass** bei der Initialisierung der Mittel (1, 2) die für eine Anwendung spezifischen Parameter in einen Arbeitsspeicher geladen werden.

10. Vorrichtung nach einem der vorhergehenden Ansprüche, **dadurch gekennzeichnet, dass** sie Warneinrichtungen aufweist, um über einen Störungsfall zu benachrichtigen.

11. Vorrichtung nach einem der vorhergehenden Ansprüche, **dadurch gekennzeichnet, dass** das Netzwerk ein lokales digitales Netzwerk ist.

12. Vorrichtung nach einem der vorhergehenden Ansprüche, **dadurch gekennzeichnet, dass** die Mittel zur Verwaltung von Eingangs-/Ausgangsdaten Informatik-Router sind.

13. Vorrichtung nach Anspruch 12, **dadurch gekennzeichnet, dass** die Router im offenen OCP-Modus arbeiten.

14. Vorrichtung nach einem der Ansprüche 1 bis 13, **dadurch gekennzeichnet, dass** die Mittel zur Verwaltung von Eingangs-/Ausgangsdaten Datenserver sind.
